(19) Europäisches Patentamt / European Patent Office / Office européen des brevets

(11) **EP 4 231 020 A1**

(12) **EUROPEAN PATENT APPLICATION**

(43) Date of publication:
**23.08.2023 Bulletin 2023/34**

(21) Application number: **23157564.8**

(22) Date of filing: **20.02.2023**

(51) International Patent Classification (IPC):
**G01P 3/488** *(2006.01)*     **G01P 3/489** *(2006.01)*

(52) Cooperative Patent Classification (CPC):
**G01P 3/488; G01P 3/489**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.02.2022 US 202217675878**

(71) Applicant: **Hamilton Sundstrand Corporation Charlotte, NC 28217-4578 (US)**

(72) Inventors:
• **Hess, Gary L.**
  **Somers, 06071 (US)**
• **Peterson, Eric**
  **Phoenix, 85048 (US)**

(74) Representative: **Dehns**
  **St. Bride's House**
  **10 Salisbury Square**
  **London EC4Y 8JD (GB)**

(54) **SENSING SYSTEMS**

(57)     A sensor system can include a sensor (101) configured to output a sensor signal having a waveform output with noise and a peak detector module (103) configured to receive the waveform output from the sensor and to detect a peak amplitude of the waveform output. The peak detector module can be configured to output a peak amplitude signal. The system can include a threshold module (105) configured to receive the peak amplitude signal and to calculate a cutoff threshold based on the peak amplitude signal. The threshold module can be configured to output a cutoff threshold signal. The system can include a comparator (107) operatively connected to the sensor and the threshold module. The comparator can be configured to receive the sensor signal and the cutoff threshold signal to compare the sensor signal and the cutoff signal. The comparator can be configured to output a high signal or a low signal based on the comparison of the sensor signal and the cutoff threshold signal which changes as a function of the peak amplitude of the sensor signal.

Fig. 1

EP 4 231 020 A1

**Description**

<u>FIELD</u>

This disclosure relates to sensing systems, e.g., for speed sensing on aircraft rotational systems.

<u>BACKGROUND</u>

Aircraft systems have a need to read speeds of many rotating shafts like engines, wheels, and propellers, for example. These rotational speed systems often utilize variable magnetic reluctance sensors. Such sensor outputs can be sinusoids, and the amplitude is typically proportional to rotational speed. Also, these sensors are typically read with zero cross detections that set threshold and hysteresis levels to minimize noise. The controls then use comparators with hysteresis to read the sensors. However, noise also increases as the rotational speed increases. In traditional systems, this noise limits the viable frequency range of speed that can be detected due to false tripping.

Such conventional methods and systems have generally been considered satisfactory for their intended purpose. However, there is still a need in the art for improved sensing systems. The present disclosure provides a solution for this need.

<u>SUMMARY</u>

A sensor system can include a sensor configured to output a sensor signal having a waveform output with noise and a peak detector module configured to receive the waveform output from the sensor and to detect a peak amplitude of the waveform output. The peak detector module can be configured to output a peak amplitude signal. The system can include a threshold module configured to receive the peak amplitude signal and to calculate a cutoff threshold based on the peak amplitude signal. The threshold module can be configured to output a cutoff threshold signal. The system can include a comparator operatively connected to the sensor and the threshold module. The comparator can be configured to receive the sensor signal and the cutoff threshold signal to compare the sensor signal and the cutoff signal. The comparator can be configured to output a high signal or a low signal based on the comparison of the sensor signal and the cutoff threshold signal which changes as a function of the peak amplitude of the sensor signal.

The comparator can be configured to output the high signal when the sensor signal is on a first side of the cutoff threshold, and to output the low signal when the sensor signal is on an opposite side of the cutoff threshold. The threshold module can be further configured to modify a hysteresis of the system by calculating the cutoff threshold signal as a function of the peak amplitude and a comparator output.

The threshold module can be operatively connected to the comparator to receive the comparator output. The threshold module can be configured to calculate the cutoff threshold signal additionally as a function of the comparator output. The threshold module can be configured to change a hysteresis of the comparator. In certain embodiments, the cutoff threshold signal can be calculated as:

$$V\_Hys = V(Peak\_Det) - 0.1 + V(Vout)/75 - V(Vout) * V(Peak\_Det)/7,$$

where V is a cutoff threshold signal voltage, V(Peak_Det) is the peak detection signal voltage, and Vout is the comparator output voltage. Any suitable other equation having any other suitable variables and/or constants within the equation is contemplated herein. For example, the above shown constants can be modified to produce a desired effect on the threshold and/or hysteresis.

In certain embodiments, the sensor is a variable reluctance magnetic sensor. Any other suitable sensor (e.g., that produces a waveform signal with noise) is contemplated herein.

In accordance with at least one aspect of this disclosure, a sensor system can include a sensor, a threshold module configured to provide a non-static cutoff threshold signal, and a comparator. The system can be configured for outputting signals over any frequency or amplitude of input signal without causing false tripping. The sensor system and/or any portion(s) thereof can be similar to or the same as the sensor system and/or any portion(s) thereof as described above.

In accordance with at least one aspect of this disclosure, a method for compensating for noise in a speed sensor system can include providing a non-static cutoff threshold signal to a comparator to compensate for the effect of noise on a speed sensor signal to output an accurate speed sensor signal at any speed range and without false tripping of the comparator. The sensor can be a variable reluctance magnetic sensor for sensing rotational speed on a shaft. The non-static cutoff threshold can be calculated as a function of peak voltage of the speed sensor signal.

These and other features of the embodiments of the subject disclosure will become more readily apparent to those skilled in the art from the following detailed description taken in conjunction with the drawings.

## BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:

Fig. 1 is a schematic diagram of an embodiment of a sensor system in accordance with this disclosure;
Fig. 2A is a circuit diagram of an embodiment of the system of Fig. 1;
Fig. 2B shows an embodiment of sensor simulation values;
Fig. 3 is a chart showing results of using the embodiment of Figs. 2A and 2B over a ramped input (e.g., increasing rotational speed), showing the ramped input, a waveform sensor output, a peak detector module output, a threshold module output, and a comparator output plotted relative to each other;
Fig. 4A shows a close up of the sensor signal of Fig. 3, illustrating the noise on the sensor output at a low input speed;
Fig. 4B shows a close up of the sensor signal of Fig. 3, illustrating the noise on the sensor output at a higher input speed;
Fig. 5A is a schematic diagram of an embodiment of a mechanical system with a rotating shaft utilizing an embodiment of a sensor system in accordance with this disclosure;
Fig. 5B shows an embodiment of sensor voltage amplitude vs. speed of rotation of the rotating shaft of Fig. 5A;
Fig. 6A is a chart showing sensor output and constituent components, as well as a static threshold that is constant over the speed range;
Fig. 6B shows a comparison chart of sensor signal output against the comparator output for a system having a static threshold configured to allow comparator output at low speed, wherein false tripping occurs at high speed presenting erroneous speed indications; and
Fig. 6C shows a comparison chart of sensor signal output against the comparator output for a system having a static threshold configured to allow comparator output within a designed high speed range without false tripping, wherein no speed indications are provided at low speed.

## DETAILED DESCRIPTION

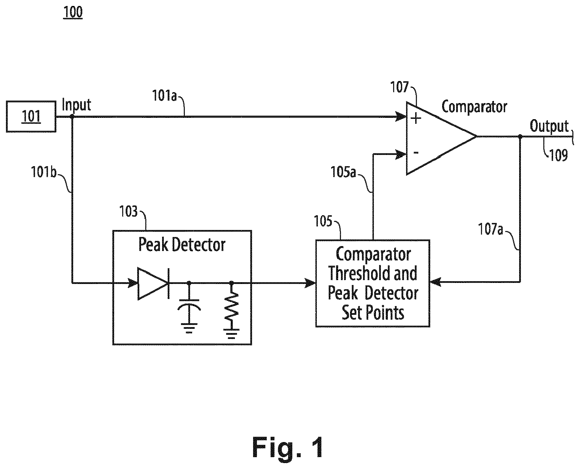

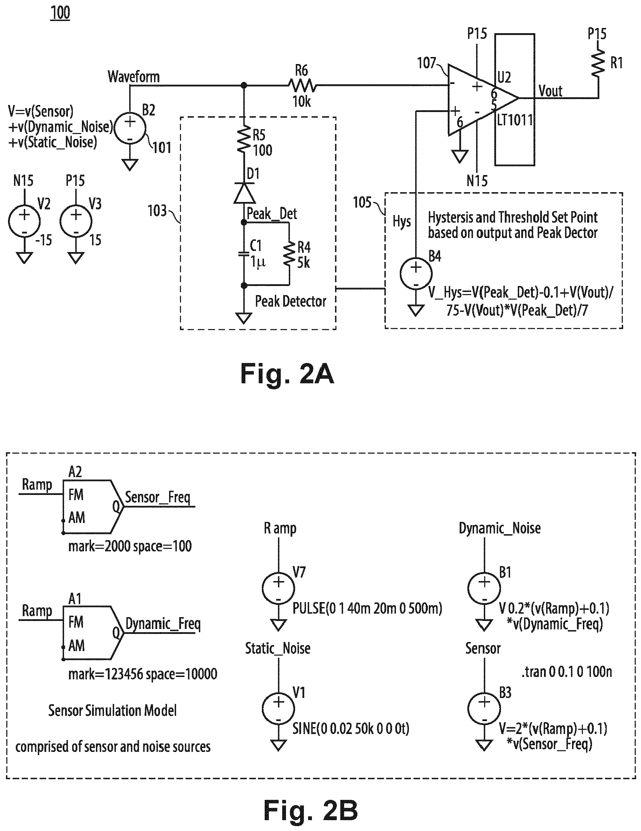

Reference will now be made to the drawings wherein like reference numerals identify similar structural features or aspects of the subject disclosure. For purposes of explanation and illustration, and not limitation, an illustrative view of an embodiment of a sensor system in accordance with the disclosure is shown in Fig. 1 and is designated generally by reference character 100. Other embodiments and/or aspects of this disclosure are shown in Figs. 2A-6C. Certain embodiments described herein can be used to provide speed sensor information at all speeds and without false tripping (e.g., for rotational system speed sensors with waveform output and noise).
Referring to Figs. 1 and 2A, a sensor system 100 can include a sensor 101 configured to output a sensor signal (e.g., on input line 101a) having a waveform output with noise. The system 100 can also include a peak detector module 103 configured to receive the waveform output from the sensor 101 (e.g., via line 101b) and to detect a peak amplitude of the waveform output. The peak detector module 103 can be configured to output a peak amplitude signal (e.g., via line 103a), for example.
The system 100 can include a threshold module 105 configured to receive the peak amplitude signal (e.g., via line 103a) and to calculate a cutoff threshold based on the peak amplitude signal. The threshold module 105 can be configured to output a cutoff threshold signal, for example (e.g., via comparator input line 105a). The cutoff threshold signal can be a waveform (e.g., sinusoidal and/or square wave), for example.
The system 100 can include a comparator 107 operatively connected to the sensor 101 (e.g., via input line 101a) and the threshold module 105 (e.g., via comparator input line 105a). The comparator 107 can be configured to receive the sensor signal and the cutoff threshold signal to compare the sensor signal and the cutoff signal (e.g., signal subtraction as shown). The comparator 107 can be configured to output (e.g., on output line 109) a high signal or a low signal (e.g., no/zero signal or any suitable lower than high voltage signal signal) based on the comparison of the sensor signal and the cutoff threshold signal which changes as a function of the peak amplitude of the sensor signal.
The comparator 107 can subtract the cutoff threshold signal from the sensor signal and output a high when the result is greater than zero in certain embodiments, or less than zero in certain embodiments. The comparator 107 can be configured to output the high signal when the sensor signal is on a first side of the cutoff threshold (e.g., when the net sensor signal amplitude is above the amplitude of the cutoff threshold), and to output the low signal when the sensor signal is on an opposite side of the cutoff threshold (e.g., when the sensor signal amplitude is below that of the cutoff threshold signal).
The threshold module 105 can be further configured to modify a hysteresis of the system 100 (e.g., the output) by calculating the cutoff threshold signal as a function of the peak amplitude and a comparator output. The threshold module 105 can be operatively connected to the comparator 107 to receive the comparator output (e.g., via line 107a). The threshold module 105 can be configured to calculate the cutoff threshold signal additionally as a function of the comparator output. For example, the threshold module 105 can be configured to change a hysteresis of the comparator. In certain embodiments, the cutoff threshold signal can be calculated as:

$$V\_Hys=V(Peak\_Det) - 0.1 + V(Vout)/75 - V(Vout) * V(Peak\_Det)/7,$$

where V is a cutoff threshold signal voltage, V(Peak_Det) is the peak detection signal voltage, and Vout is the comparator output voltage. Any suitable other equation having any other suitable variables and/or constants within the equation is contemplated herein. For example, the above shown constants can be modified to produce a desired effect (e.g., one or more fixed offsets based on any suitable system voltage) on the threshold and/or hysteresis.

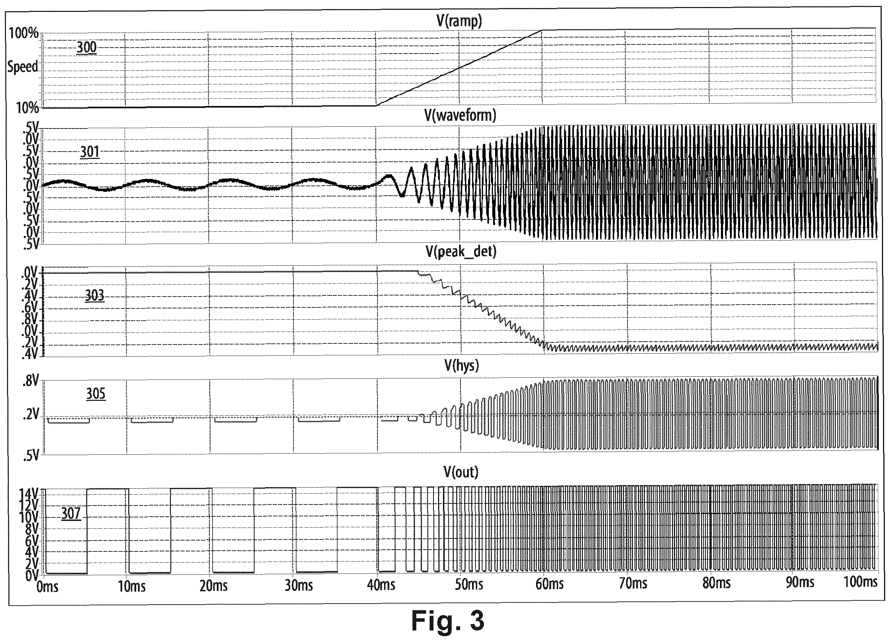

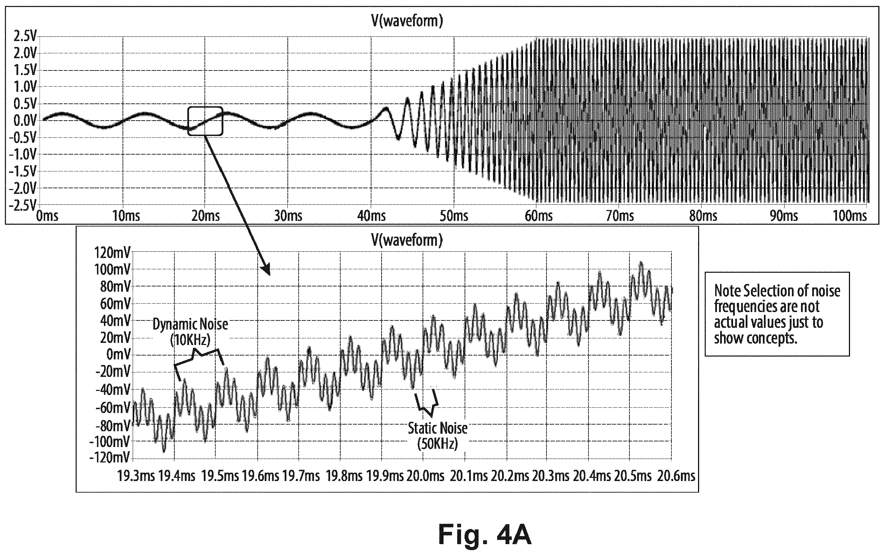

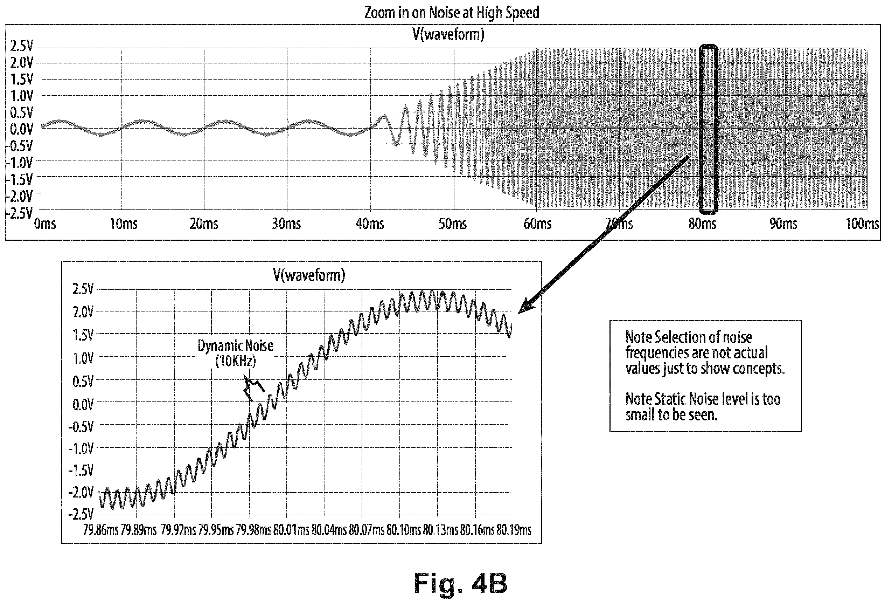

By way of example, Fig. 2B shows an embodiment of sensor simulation values. Fig. 3 is a chart showing results of using the embodiment of Fig. 2B over a ramped input (e.g., corresponding to increasing rotational speed). Fig. 3 shows the ramped input 300, a waveform sensor output 301, a peak detector module output 303, a threshold module output 305, and a comparator output 307, each plotted relative to each other. Fig. 4A shows a close up of the sensor signal 301 of Fig. 3, illustrating the noise on the sensor output 301 at a low input speed 300. Fig. 4B shows a close up of the sensor signal 301 of Fig. 3, illustrating the noise on the sensor output 301 at a higher input speed 300. As can be seen, static noise is a larger portion of noise at lower speeds and dynamic noise is a larger share of the noise (e.g., the driving factor of noise) at higher speeds.

As shown in Fig. 3, as the input speed 300 increases, the frequency and amplitude of the sensor output 301 both increase. Dynamic noise may also increase while static noise remains the same. The peak detector module output 303 begins at about zero or a sufficiently low value at the low speed and increases in absolute value with the increasing amplitude of the sensor output 301. As a result, the threshold module output 305 has an amplitude and waveform that is configured to have an absolute value above a portion of the sensor signal 301 such that one peak within a period is not beyond the cutoff threshold value. In the embodiment shown, when the sensor output 301 peaks high, the threshold module output is sufficiently low to cause the comparator output 307 to output a low signal. When the sensor output 301 peaks low, the threshold module output 305 is sufficiently low in amplitude to allow the comparator output 301 to be high (at low speeds, e.g., shown constant until the ramp of input 300, the threshold can be about zero. As speed increases, the threshold module output 305 increases in both frequency and amplitude causing both increase in both threshold and hysteresis. As shown in the comparator output 307, embodiments can provide accurate output at all speeds without false tripping.

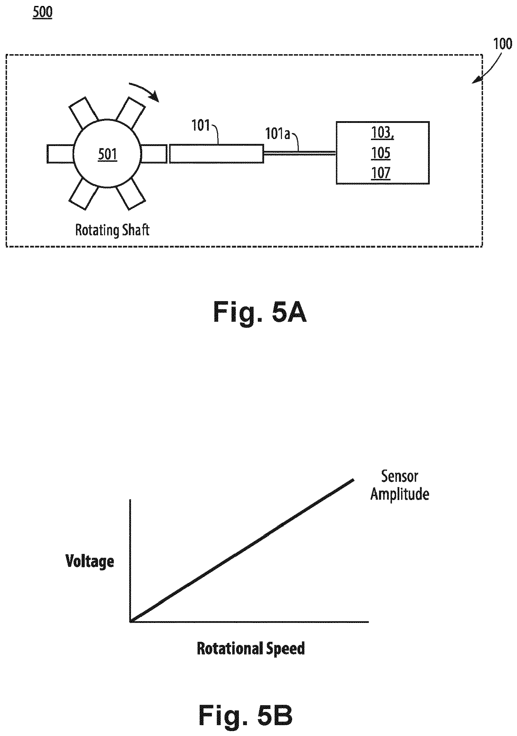

Fig. 5A is a schematic diagram of an embodiment of a mechanical system 500 with a rotating shaft 501 utilizing an embodiment of a sensor system (e.g., 100) in accordance with this disclosure. For example, in certain embodiments, e.g., as shown, the sensor 101 can be a variable reluctance magnetic sensor. Any other suitable sensor (e.g., that produces a waveform signal with noise) is contemplated herein. Fig. 5B shows an embodiment of sensor voltage amplitude vs. speed of rotation of the rotating shaft of Fig. 5A.

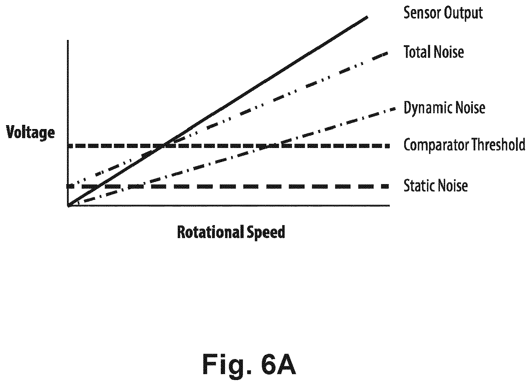

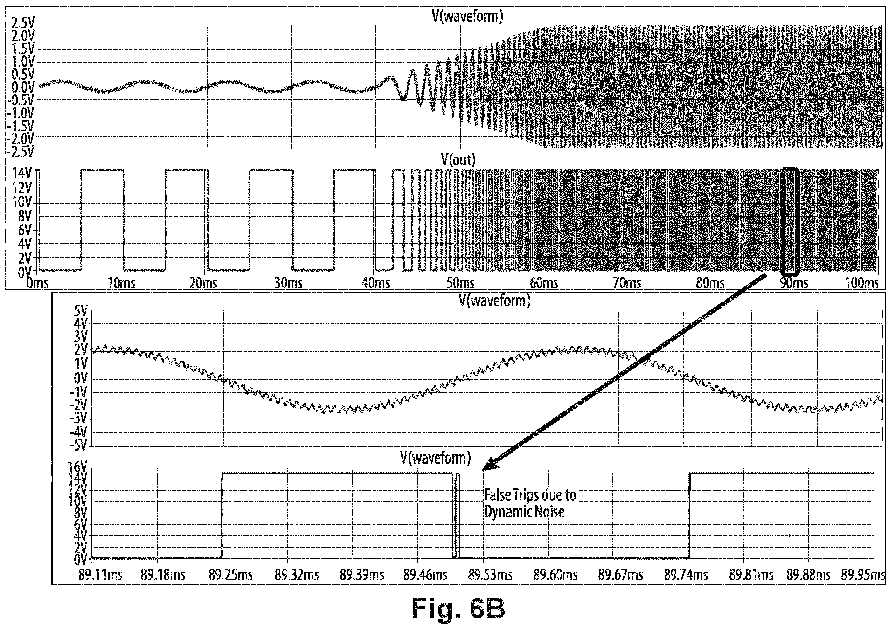

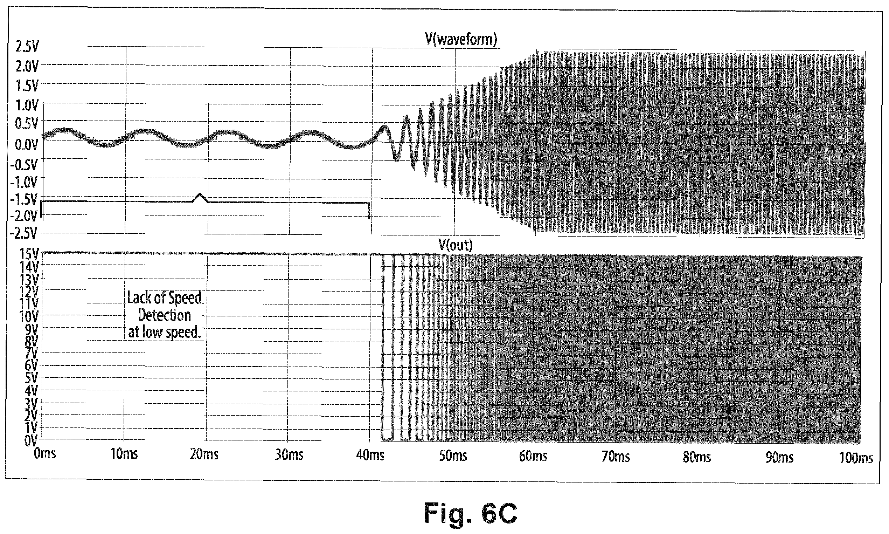

Fig. 6A is a chart showing sensor output and constituent components, as well as a static threshold that is constant over the speed range. Fig. 6B shows a comparison chart of sensor signal output against the comparator output for a system having a static threshold configured to allow comparator output at low speed. As can be seen, false tripping occurs at high speed presenting erroneous speed indications. Fig. 6C shows a comparison chart of sensor signal output against the comparator output for a system having a static threshold configured to allow comparator output within a designed high speed range without false tripping, wherein no speed indications are provided at low speed.

In accordance with at least one aspect of this disclosure, a sensor system can include a sensor, a threshold module configured to provide a non-static cutoff threshold signal, and a comparator. The system can be configured for outputting signals over any frequency or amplitude of input signal without causing false tripping. The sensor system and/or any portion(s) thereof can be similar to or the same as the sensor system (e.g., 100) and/or any portion(s) thereof as described above.

In accordance with at least one aspect of this disclosure, a method for compensating for noise in a speed sensor system can include providing a non-static cutoff threshold signal to a comparator to compensate for the effect of noise on a speed sensor signal to output an accurate speed sensor signal at any speed range and without false tripping of the comparator. The sensor can be a variable reluctance magnetic sensor for sensing rotational speed on a shaft. The non-static cutoff threshold can be calculated as a function of peak voltage of the speed sensor signal.

Embodiments can provide improved speed sensor systems (e.g., for rotating shafts, e.g., on aircraft components/engines). For example, at lower speed, hysteresis can be changed to be longer and the threshold to be lower using a peak detector. This can allow sensing below an otherwise fixed threshold because noise alone cannot trip the output.

Traditional approaches use a fixed threshold that is set sufficiently high, but this approach limits the minimum frequency that can be converted/minimum speed detected. Other traditional systems require frequency filtering to minimize the noise such that the threshold can be lowered, however, this filtering can create a phase lag that limits the system accuracy. In certain applications, these sensors can require absolute position/time measurements for determining things including torque, relative phase positioning and exact shaft position. Such sensors are far more sensitive to phase lag than other sensors that are only measuring rotational speed.

Embodiments, however, can utilize a peak detector that can be used to increase the comparator threshold and hysteresis levels. As shown in Fig. 3, for example, ItSpice behavioral models were used to model the sensor and noise and set comparator thresholds. A ramp waveform was used to simulate rotational speed. The shown sensor output waveform represents the sum of the Dynamic Noise and Static Noise and the Sensor itself. The above noted simulation shows that the sensor circuit was able to convert the signal into a pulse waveform while rejecting noise by increasing hysteresis and threshold. It is noted that at maximum speed shown, the noise was larger than the amplitude of the signal at minimum speed, yet an accurate result was still output without noise filtering.

Embodiments therefore provide improvements to traditional speed sensor systems, e.g., rotational speed sensing systems with noise on the sensor output. Embodiments can provide the ability to read a larger range of frequencies without causing phase lag at higher frequencies.

Any suitable module disclosed herein can include any suitable computer hardware and/or software module(s) to perform any suitable function (e.g., as disclosed herein). As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a nonexhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of "

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the invention as defined by the claims.

**Claims**

1. A sensor system, comprising:

   a sensor (101) configured to output a sensor signal having a waveform output with noise;
   a peak detector module (103) configured to receive the waveform output from the sensor and to detect a peak amplitude of the waveform output, the peak detector module configured to output a peak amplitude signal;
   a threshold module (105) configured to receive the peak amplitude signal and to calculate a cutoff threshold based on the peak amplitude signal, wherein the threshold module is configured to output a cutoff threshold signal; and
   a comparator (107) operatively connected to the sensor and the threshold module,

   wherein the comparator is configured to receive the sensor signal and the cutoff threshold signal to compare the sensor signal and the cutoff signal, wherein the comparator is configured to output a high signal or a low signal based on the comparison of the sensor signal and the cutoff threshold signal which changes as a function of the peak amplitude of the sensor signal.

2. The system of claim 1, wherein the comparator is configured to output the high signal when the sensor signal is on a first side of the cutoff threshold, and to output the low signal when the sensor signal is on an opposite side of the cutoff threshold signal.

3. The system of claim 1 or 2, wherein the threshold module is further configured to modify a hysteresis of the comparator by calculating the cutoff threshold signal as a function of the peak amplitude and a comparator output.

4. A sensor system, comprising:

a sensor (101) configured to output a sensor signal having a waveform output with noise;
a threshold module (105) configured to provide a non-static cutoff threshold signal; and
a comparator (107) operatively connected to the sensor and the threshold module,

wherein the comparator is configured to receive the sensor signal and the cutoff threshold signal to compare the sensor signal and the cutoff signal, wherein the comparator is configured to output a high signal or a low signal based on the comparison of the sensor signal and the cutoff threshold signal, wherein the system is configured for outputting signals over any frequency or amplitude of input signal without causing false tripping.

5. The system of claim 4, wherein the system includes a peak detector module (103) configured to receive the waveform output from the sensor and to detect a peak amplitude of the waveform output, the peak detector module configured to output a peak amplitude signal, wherein the threshold module is configured to receive the peak amplitude signal and to output the cutoff threshold signal based on the peak amplitude signal.

6. The system of claim 4 or 5, wherein the comparator is configured to output the high signal when the sensor signal is on a first side of the cutoff threshold, and to output the low signal when the sensor signal is on an opposite side of the cutoff threshold.

7. The system of claim 4, 5 or 6, wherein the threshold module is further configured to modify a hysteresis of the system by calculating the cutoff threshold signal as a function of the peak amplitude and a comparator output.

8. The system of any preceding claim, wherein the threshold module is operatively connected to the comparator to receive the comparator output.

9. The system of claim 8, wherein the threshold module is configured to calculate the cutoff threshold signal additionally as a function of the comparator output.

10. The system of claim 9, wherein the threshold module is configured to change a hysteresis of the comparator.

11. The system of claim 10, wherein the cutoff threshold signal is calculated as:

$$V\_Hys = V(Peak\_Det) - 0.1 + V(Vout)/75 - V(Vout) * V(Peak\_Det)/7,$$

where V is a cutoff threshold signal voltage, V(Peak_Det) is the peak detection signal voltage, and Vout is the comparator output voltage.

12. The system of claim 11, wherein the sensor is a variable reluctance magnetic sensor.

13. A method for compensating for noise in a speed sensor system, comprising:
providing a non-static cutoff threshold signal to a comparator to compensate for the effect of noise on a speed sensor signal to output an accurate speed sensor signal at any speed range and without false tripping of the comparator.

14. The method of claim 13, wherein the sensor is a variable reluctance magnetic sensor for sensing rotational speed on a shaft.

15. The method of claim 13 or 14, wherein the non-static cutoff threshold is calculated as a function of peak voltage of the speed sensor signal.

100

Fig. 1

100

Waveform
R6
10k
P15
107
U2
6
Vout
P15
R1

V=v(Sensor)
+v(Dynamic_Noise)
+v(Static_Noise)
B2
101
−
+

−
+
6
LT1011

N15
P15

V2
−15
V3
15

103

R5
100
D1
Peak_Det
C1
1μ
R4
5k

Peak Detector

N15

105
Hys
B4
+
−
Hystersis and Threshold Set Point
based on output and Peak Dector

V_Hys=V(Peak_Det)−0.1+V(Vout)/
75−V(Vout)*V(Peak_Det)/7

# Fig. 2A

A2
Ramp
FM
AM
Q
Sensor_Freq

mark=2000 space=100

A1
Ramp
FM
AM
Q
Dynamic_Freq

mark=123456 space=10000

Sensor Simulation Model

comprised of sensor and noise sources

Ramp
V7
+
−
PULSE(0 1 40m 20m 0 500m)

Static_Noise
V1
+
−
SINE(0 0.02 50k 0 0 0t)

Dynamic_Noise
B1
+
−
V 0.2*(v(Ramp)+0.1)
*v(Dynamic_Freq)

Sensor
B3
+
−
.tran 0 0.1 0 100n

V=2*(v(Ramp)+0.1)
*v(Sensor_Freq)

# Fig. 2B

**Fig. 3**

Fig. 4A

Fig. 4B

500

100

501

101

101a

103,
105
107

Rotating Shaft

# Fig. 5A

Sensor
Amplitude

Voltage

Rotational Speed

# Fig. 5B

**Fig. 6A**

Fig. 6B

Fig. 6C

Europäisches
Patentamt

European
Patent Office

Office européen
des brevets

# EUROPEAN SEARCH REPORT

Application Number

EP 23 15 7564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/293675 A1 (HESS ET AL) 26 September 2019 (2019-09-26) | 1,2,4-6, 13-15 | INV. G01P3/488 G01P3/489 |
| A | * abstract; figures 2,3 * * paragraphs [0019] - [0026] * | 3,7-12 | |
| X | US 5 570 052 A (FONDERIE ET AL) 29 October 1996 (1996-10-29) | 1-10, 13-15 | |
| A | * abstract; figures 2,6 * * columns 3,5 * | 11,12 | |
| X | US 5 477 142 A (GOOD ET AL) 19 December 1995 (1995-12-19) | 1-10, 13-15 | |
| A | * abstract; figures 1,2B * * columns 3,9,10 * | 11,12 | |

TECHNICAL FIELDS
SEARCHED      (IPC)

G01P

The present search report has been drawn up for all claims

| Place of search | Date of completion of the search | Examiner |
|---|---|---|
| Munich | 28 June 2023 | Barthélemy, Matthieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 23 15 7564

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2023

| Patent document cited in search report | | Publication date | Patent family member(s) | | Publication date |
|---|---|---|---|---|---|
| US 2019293675 | A1 | 26-09-2019 | EP | 3236270 A1 | 25-10-2017 |
| | | | US | 2017307645 A1 | 26-10-2017 |
| | | | US | 2019293675 A1 | 26-09-2019 |
| | | | US | 2020363442 A1 | 19-11-2020 |
| US 5570052 | A | 29-10-1996 | DE | 69612057 T2 | 13-09-2001 |
| | | | EP | 0774178 A1 | 21-05-1997 |
| | | | JP | H10504436 A | 28-04-1998 |
| | | | KR | 970705235 A | 06-09-1997 |
| | | | US | 5570052 A | 29-10-1996 |
| | | | WO | 9641415 A1 | 19-12-1996 |
| US 5477142 | A | 19-12-1995 | NONE | | |

EPO FORM P0459

For more details about this annex : see Official Journal of the European Patent Office, No. 12/82